# EUROPEAN PATENT APPLICATION

(11) **EP 3 163 214 A1**
(43) Date of publication of application: **03.05.2017**
(21) Application number: 16002279.4
(22) Date of filing: 25.10.2016
(51) Int. Cl.: F24J 2/18, F24J 2/06, F24J 2/08, F24J 2/07, F24J 2/54, F24J 2/52

(54) **SOLAR THERMAL SYSTEM FOR A POWER GENERATION SYSTEM**

(30) Priority: 27.10.2015 GB 201519010; 25.04.2016 GB 201607179
(71) Applicant: Van Leeuw, Jon Otegui, 81737 Munich (DE)
(72) Inventor: Van Leeuw, Jon Otegui, 81737 Munich (DE)

(57) **Abstract**

The present invention comprises a solar thermal power generation system which comprises the use of mirrors (1.3, 1.10, 1.29) which are positioned one over the other in a tower-like structure (1.5, 2.1, 3.1) which all deflect the solar rays (1.12) to a concentrated point down a channel (1.25, 1.13, 2.7, 3.7) which projects down towards the ground, hence bringing the solar ray concentration system's surface area to a minimum. The main feature of this invention is that said novel solar thermal power generation system comprises outer flat collection mirrors (1.29) which are attached to the vertical members (1.4) which sustain the two Plano convex lenses (1.11, 1.26, 1.27) at each collection level, and which reflect the solar rays to the inner flat collection mirrors (1.3, 1.10), which then reflect said solar rays vertically downwards.

The invention comprises a combination of lenses (1.11, 1.26, 1.27) and mirrors (1.3, 1.6, 1.8, 1.10, 1.29), which initially concentrate the light rays (1.12), which are initially reflected by collection mirrors (1.3, 1.10, 1.29), and which are then finally concentrated into a high intensity light beam, prior of being reflected such that said light rays are driven down a pipe (1.13, 1.25, 2.7, 3.7) embedded inside said mast structure (1.5, 2.1, 3.1) in order to evaporate flowing water (1.32, 2.9, 3.9) which flows beneath said vertically driven concentrated light rays, and therefore drive turbines (4.11), which in turn will drive generators and convert the energy of said solar rays into electricity.

The light rays are intense enough in order to convert the flowing water (1.32, 2.9, 3.9) into steam instantaneously when flowing beneath said highly intense concentrated light rays.

## Description

### Technical field:

### Power plant engineering

### Description:

The present invention comprises a solar thermal power generation system which comprises the use of mirrors which are positioned one over the other in a tower-like structure which all deflect the solar rays to a concentrated point down a channel which projects down towards the ground, hence bringing the solar ray concentration system's surface area to a minimum.

The invention comprises a combination of lenses and mirrors, which initially concentrate the light rays, which are initially reflected by collection mirrors, and which are then finally concentrated into a high intensity light beam, prior of being reflected such that said light rays are driven down a pipe embedded inside said mast structure in order to evaporate flowing water which flows beneath said vertically driven concentrated light rays, and therefore drive turbines, which in turn will drive generators and convert the energy of said solar rays into electricity.

The light rays are intense enough in order to convert the flowing water into steam instantaneously when flowing beneath said highly intense concentrated light rays.

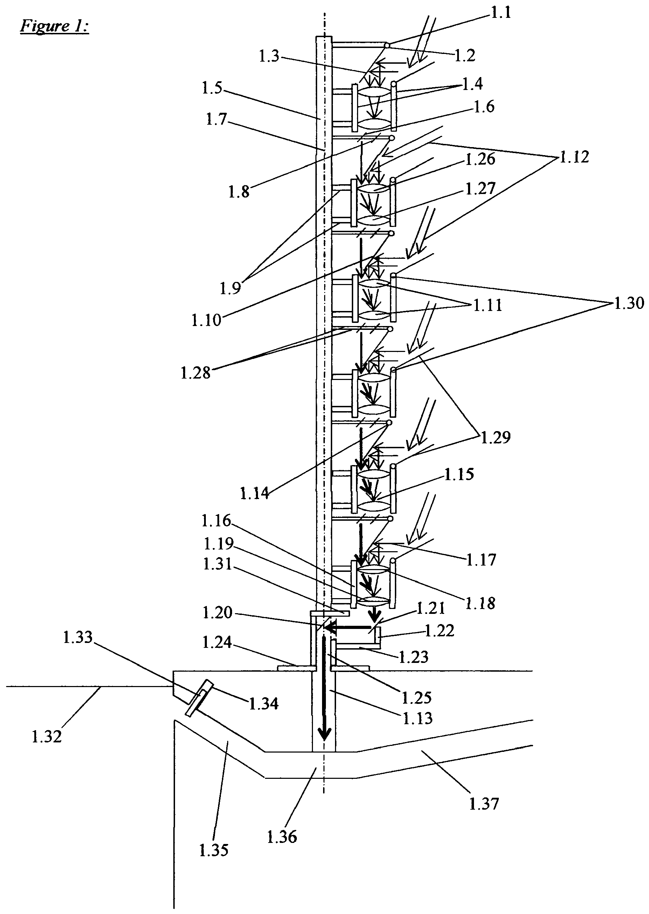

Figure 1 comprises a side, central cross-sectional view of the solar ray concentration system's layout.

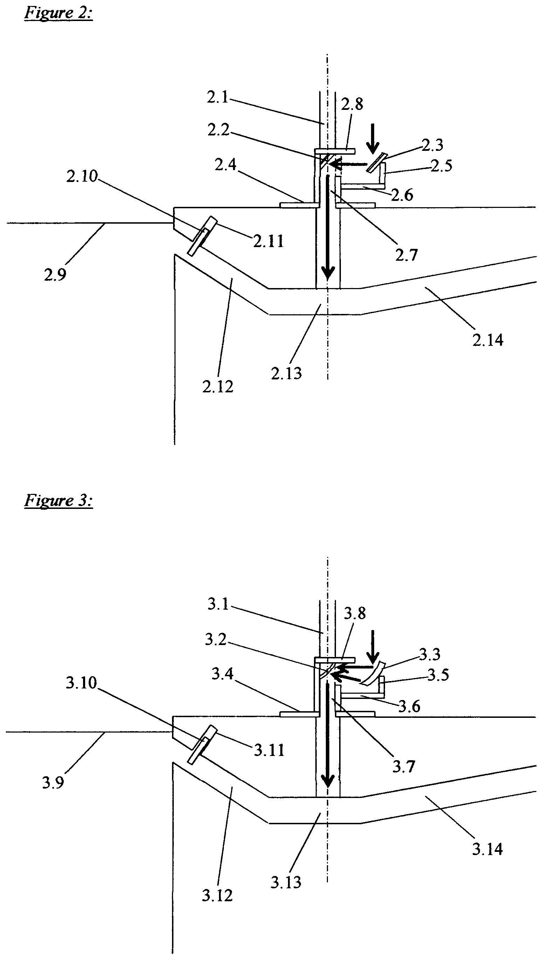

Figure 2 comprises a side, central cross-sectional view of the lower area of the solar ray concentration system in which the lower reflecting mirrors comprise curved surface geometries.
Figure 3 comprises a side, central cross-sectional view of the lower area of the solar ray concentration system in which the lower reflecting mirrors comprise concave and convex surface geometries.

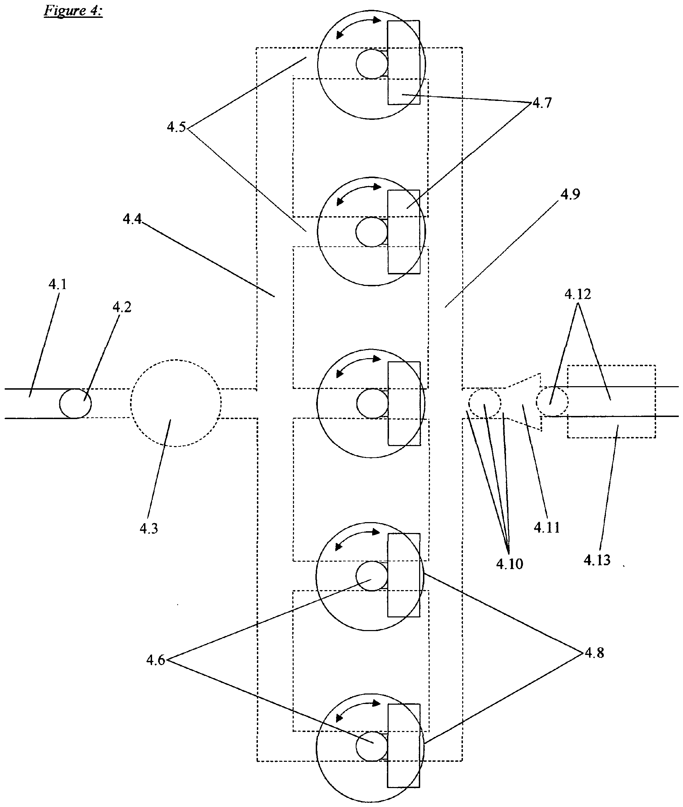

Figure 4 comprises a top view of the distribution of parallel positioned piping system which is interconnected, such that each pipe flows under one of said solar concentrating towers (1.5), and hence under the evaporation areas (1.36, 2.13, 3.13) of said solar ray concentrators.

The present invention comprises a solar ray concentration system which comprises flat mirrors (1.3) which can be oriented and actuated by a pivot connecting the upper part of said mirrors (1.3) with a horizontally projecting member(s) (1.1), which also sustain(s) a set of two oppositely positioned flat mirrors (1.6, 1.8) which are each inclined at 45 degree angles, so that the inner 45 degree inclined mirrors (1.8) partly project towards said mast structure (1.5, 2.1, 3.1) and partly upwards towards the Plano-convex/convex lenses (1.11, 1.26, 1.18, 1.27, 1.19), while said outer 45 degree inclined mirrors (1.6) partly project downwards towards the Plano-convex/convex lenses (1.11, 1.26, 1.18, 1.27, 1.19) and partly horizontally away from said mast structure (1.5, 2.1, 3.1) towards said inner 45 degree inclined mirror (1.8).

Said flat inclined collection mirrors (1.3) are in any case mounted on top of a set of two Plano-convex lenses (1.11, 1.26, 1.27), whose horizontal surface spans to fully cover the outer 45 degree inclined mirror (1.6) and said collection mirror (1.3), so that the solar rays (1.12) which are collected by said flat collection mirrors (1.3), are all collected by the upper Plano-convex lens (1.26, 1.18) and are then refracted by said lens (1.26, 1.18) into a coherent light beam which projects downwards towards the lower Plano-convex lens (1.27, 1.19). Said lower Plano-convex lens (1.27, 1.19) is positioned such that its (1.27, 1.19) upper surface is positioned on or below the focal point of the coherent light ray beam being driven down from said upper Plano-convex lens (1.27, 1.19). This configuration is designed such that said lower Plano-convex lens (1.27, 1.19) reflects the light rays again vertically, hence resulting in a highly intense, vertically driven coherent light beam which drives straight to the inner 45 degree inclined mirror's surface (1.8).

Said lenses (1.11, 1.26, 1.27, 1.18, 1.19) are both surrounded by an opaque layer of solid material (1.4) which surrounds the vertical distance between said two lenses (1.11, 1.26, 1.27). This layer of opaque material (1.4) surrounds the two lenses (1.11, 1.26, 1.27, 1.18, 1.19) in the case of each set of lenses (1.11), hence meaning that said opaque material layer (1.4) absorbs any undesired refracted incident rays coming from the lower surfaces of the lenses (1.11, 1.26, 1.27, 1.18, 1.19), therefore absorbing said light rays and impeding any incidents due to said undesired incident light rays.

Said lenses (1.26, 1.18, 1.27, 1.19) are mounted on top of each other and are all mounted to a vertical mast (1.5, 2.1, 3.1) which can be rotated about its central axis (1.7) by an electric actuated rotational system (1.24).

The surface of the lower Plano-convex lens (1.27) is approximately positioned along or below the focal point of the concentrated rays by said upper Plano-convex lens (1.26). Said system comprises a set of systems mounted on top of each other, with each of said systems comprising a flat mirror (1.3) mounted on top of said set of two Plano-convex lenses (1.11, 1.26, 1.27), mounted on top of said set of opposite facing 45 degree inclined mirrors (1.6, 1.8), and in which the lowest of said systems preferably comprises convex lenses (1.19, 1.18) replacing said Plano-convex lenses (1.11, 1.26, 1.27). This design configuration is arranged such that the light rays (1.12) are reflected by said collection mirrors (1.3) and then concentrated by said lenses (1.11, 1.26, 1.27, 1.18, 1.19). Then, said rays are driven to the next lower set of lenses (1.11, 1.26, 1.27, 1.18, 1.19) while the flat collection mirror (1.3) positioned on top of said lower next set of lenses (1.11, 1.26, 1.27, 1.18, 1.19) reflects further light towards the upper surface of the upper Plano-convex lens (1.26, 1.18), which is part of the same set of lenses (1.11, 1.26, 1.27, 1.18, 1.19), which is positioned just under said collection mirror (1.3).

This process is therefore repeated during a finite number of times while the light rays (1.12) are collected and then concentrated down the vertical mast structure (1.5, 2.1, 3.1), until obtaining an extremely intense, highly energetic light ray.

The flat collection mirrors (1.3) are positioned beside of the outer 45 degree inclined mirrors (1.6), such that these (1.3) are positioned further away from said vertical mast structure (1.5, 2.1, 3.1) than said outer 45 degree inclined mirrors (1.6). However, said outer 45 degree inclined mirrors are positioned above said collection mirrors (1.3). The inner 45 degree inclined mirrors (1.8) are positioned approximately over said collection mirrors (1.3), thus being positioned just under the centre area of said lenses (1.11, 1.26, 1.27, 1.18, 1.19). So, in other words, said set of 45 degree inclined mirrors (1.6, 1.8) comprise a set of mirrors which are positioned one exactly beside the other, with said outer 45 degree inclined mirror (1.6) being positioned closer to the mast structure (1.5, 2.1, 3.1) than said 45 degree inclined mirror (1.8).

This hence means that the light concentrated rays are refracted by two 45 degree inclined mirrors (1.6, 1.8), which drives the light from being vertically driven from the centre area of said lenses (1.11, 1.26, 1.27, 1.18, 1.19) to the area just behind the place of action and position of said flat collection mirrors (1.3). The inner 45 degree inclined mirror (1.8) reflects the vertically driven light rays which come from the lower Plano-convex lens (1.27, 1.19) to a horizontal direction and exactly towards said tower mast structure (1.5, 2.1, 3.1), and hence towards said outer 45 degree inclined mirror (1.6). Then, the outer 45 degree inclined mirror reflects said concentrated light rays again from said horizontal direction to a vertical direction, which hence drives said light rays behind said lower collection mirror (1.3).

This design configuration avoids any disturbance in the light rays being driven from the front of said collection mirrors (1.3) as a result of the highly concentrated light rays being reflected by said outer 45 degree inclined flat mirrors (1.6). Both inner (1.8) and outer (1.6) 45 degree inclined mirrors are flat, in order to reflect the light rays in a fully controlled manner.

The lowest set of Plano-convex lenses (1.18, 1.19) should comprise lenses (1.18, 1.19) which should comprise geometries such that these (1.18, 1.19) comprise convex geometries. In other words, said lower lenses (1.18, 1.19) should be convex lenses, such that the upper lens (1.18) will concentrate the coherent light rays from the tower structure (1.5), but not only from along the width of the lenses, (1.18), but also form all along the length of the lenses (1.18). This design will allow the use of long Plano-convex lenses (1.11, 1.26, 1.27, 1.18, 1.19) in said solar ray concentration system, which will multiply the amount of light concentrated by the mirrors by a very significant factor. This will hence increase the power produced by said power generation system.

The length of said collection mirrors (1.3) and said inner (1.8) and outer (1.6) 45 degree inclined mirrors is exactly the same as that from said lenses (1.11, 1.26, 1.27, 1.18, 1.19), not only the Plano-convex ones (1.26, 1.27), but also the lowest convex ones (1.18, 1.19).

Then, the lower convex lens (1.19) refracts the light rays such that a very intense and coherent vertical light rays comes out of said lower convex lens (1.19) as a result. The dimensions of said light ray are such that said light ray can be reflected and driven through a pipe (1.25) which is embedded inside said mast structure (1.5, 1.2, 3.1).

The centre surface of the lower convex lens (1.19) is, just as the one of the lower Plano-convex lenses (1.27), positioned just on or below the focal point of the light rays being refracted from the upper Plano-convex (1.26) or convex (1.18) lenses, such that said lower lenses (1.27, 1.19) refract the light rays in the appropriate manner in order for said rays to be driven in a highly intense and coherent vertical light ray.

Then, the light rays are reflected by a set of 45 degree angled flat mirrors (1.21, 1.20) which are positioned one beside the other. Said set of mirrors (1.22, 1.20) comprises a 45 degree inclined mirror (1.21) which partly faces upwards towards said Plano-convex/convex lenses (1.18, 1.19), and partly faces horizontally towards said mast structure (1.5, 2.1, 3.1). However, the other 45 degree inclined flat mirror (1.20) faces partly horizontally towards said outer 45 degree inclined mirror (1.21), and partly downwards towards said pipes (1.25), which is embedded inside the lower volume of said vertical mast structure (1.5,2.1, 3.1).

The inner 45 degree inclined mirror (1.20) is embedded inside the inner volume of the lower structure of said vertical mast structure (1.5, 2.1, 3.1).

Therefore, said outer 45 degree inclined mirror (1.21) reflects the concentrated light rays from a vertical motion to a horizontal motion facing towards said mast structure (1.5, 2.1, 3.1), and hence facing towards said inner 45 degree inclined mirror (1.20). Then, said inner 45 degree inclined mirror (1.20) reflects the light from said horizontal motion to a downward vertical motion inside said pipe (1.25), which is embedded inside the lower volume of said mast structure (1.5, 2.1, 3.1).

Said embedded pipe (1.25) should preferably drive towards a vertical pipe (1.13) which drives said light rays into the ground and into a flow of water, which is therefore converted into steam with the energy of said light rays, and said steam hence then drives turbines in order to generate electricity. The ground can be part of an artificial onshore or offshore structure as well.

The mast structure (1.5,2.1,3.1) can be rotated in order to accurately orientate said collection mirrors to the position of the sun, in order to reflect the solar rays (1.12) as efficiently as possible. So, the mast structure (1.5, 2.1, 3.1) is attached to a basement structure (1.24), which is rotated with the mast (1.5, 2.1, 3,1) when being rotated and properly orientated. Said basement structure (1.24) is constantly static in relation to said mast structure (1. 5, 2.1, 3.1). So, when said basement structure (1.24) is rotated, said mast structure (1.5, 2.1,3.1) is simultaneously rotated along with said basement structure (1.24).

The outer lower 45 degree inclined mirror (1.21) is constantly positioned towards the mast structure (1.5, 2.1, 3.1), and hence towards the lower inner 45 degree inclined mirror (1.20). In order to maintain said outer mirror (1.21) oriented towards the same area of the mast structure (1.5, 2.1, 3.1) without any matter of the mast's (1.5, 2.1, 3.1) position of rotation or orientation, said outer mirror (1.21) is attached and fixed to the lower part of said mast structure (1.5, 2.1, 3.1) by the mans of two members, comprising one horizontal member (1.23, 2.6, 3.6) and one vertical member (1.22, 2.5, 3.5).

Said outer lower outer 45 degree inclined mirror (1.21) should preferably comprises an inwardly curved (2.3) surface in order to concentrate the light rays from all along the length of said mirror (1.21, 2.3) to a concentrated coherent light beam.

Said outer mirror (1.21) can also comprise a concave surface (3.3) in order to concentrate the light rays form all sides of said mirror (1.21) into a concentrated coherent light beam. Said mirrors (2.3, 3.3) should be adopted if the lowest set of lenses (1.18, 1.19) are Plano-convex instead of convex.

Said inner 45 degree inclined mirror (1.20) should preferably comprise an oppositely curved (2.2), and so, outwardly curved (2.2) surface to reflect the light rays vertically downwards into said embedded vertical pipe (1.25) from the horizontal direction after being reflected by said outer mirror (1.21). In that case, the surface of the inner mirror (1.20) should be oppositely curved to that of said front outer mirror (2.3).

In the case that the outer mirror (1.21) is comprises a concave shaped surface, said inner mirror (1.20) should comprise a convex surface (3.2) in order to reflect the concentrated light rays into a downward vertical direction into said embedded vertical pipe (1.25).

Said outer mirror (1.21) is mounted to said mast (1.5, 2.1, 3.1), which in turn comprises said oppositely facing 45 degree inclined mirror (1.20), which is positioned inside said mast's structure (1.11, 1.26, 1.27), such that the light rays are finally reflected downwards into said pipe (1.25, 2.7, 3.7), which is embedded inside the lower volume of said mast's structure (1.11, 1.26, 1.27).

The lower area of the mast structure (1.4, 2.1, 3.1) comprises an opening in between the two lower reflection mirrors (1.21, 1.20), such that said mast structure comprises an opened cavity between the two lower mirrors (1.21, 1.20) in order for the light to access said inner mirror (1.20) after being reflected by said outer mirror (1.21). In order to allow access for the reflected light into the inner volume of the lower structure of the mast (1.5, 2.1, 3.1), said opening is present, which allows the light rays to access said inner mirror (1.20), which is positioned inside the mast structure (1.5, 2.1, 3.1). Said opening can be round shaped, but should preferably be rectangular shaped, hence comprising a rectangular view when being view oppositely, or in other words, a rectangular cross-section.

In the case when the two lower reflection mirrors (1.20, 1.21) comprise curved (2.2,3.3) or convex (3.2) and concave (3.3) geometries, the distance between the outer (2.3, 3.3) and inner (2.2, 3.2) mirrors is set such that the light rays are reflected by the inner mirror (2.2, 3.2) before said light rays reach the focal point of the concentrated coherent beam which was generated previously by the outer mirror (2.3, 3.3).

The Plano-convex lenses (1.26, 1.27) refract the light rays into a small linear shaped area, which spans all along the length of said Plano-convex lenses (1.26, 1.27), in order to intensify the light rays and minimise the cross-sectional area of said rays. The convex lenses (1.18, 1.19) concentrate the light rays from all along both length and width dimensions of the lenses (1.18, 1.19) into a high intensity rectangular cross-sectioned light ray, such that said light ray can be fully reflected by the lower mirrors (1.20, 2.2, 3.2, 1.21, 2.3, 3.3) and then driven down said vertical pipe (1.25) which is embedded inside the lower volume of said mast structure (1.5,2.1,3.1).

Said members (1.1, 1.28) which support said inclined flat mirrors (1.3) are a separate structure at the top of said mast (1.1), or a set of at least one, preferably two horizontally projecting members (1.28) which projects outwards oppositely to said mast (1.5, 2.1, 3.1), and which sustains said inner and outer 45 degree inclined flat mirrors (1.6, 1.8) in the cases of the other (lower) flat mirrors (1.3), such that said inclined flat mirrors (1.3) comprise a pivot attached to the end of said horizontally projecting members (1.1, 1.28).

Said oppositely facing 45 degree flat mirrors (1.6, 1.8) are supported together by at least one (1.28), preferably two (1.28), horizontally projecting members (1.28), which support these (1.6, 1.8) from said mast structure (1.5, 2.1, 3.1), such that said inner 45 degree inclined flat mirror (1.8) partly faces upwards and partly faces horizontally and towards said mast (1.5, 2.1, 3.1), whereas said outer oppositely facing 45 degree inclined flat mirror (1.6) faces partly to said inner 45 degree inclined mirror (1.8), and partly downwards.

Said outer 45 degree inclined flat mirrors (1.6) are positioned on top of the area of the Plano-convex/convex lenses (1.11, 1.26, 1.27) which is the furthest apart from said mast (1.5, 2.1, 3.1), such that said mirrors (1.6) are on top of the respective lenses (1.11, 1.26, 1.27), and can hence reflect light downwards on said lenses (1.11, 1.26, 1.27), but behind of said flat inclined collection mirrors of (1.3).

Said sets of Plano-convex/convex lenses (1.11, 1.26, 1.27) comprise one Plano-convex/convex lens (1.26, 1.18) mounted on top of another Plano-convex/convex lens (1.27, 1.19), such that each of said sets of lenses (1.11, 1.26, 1.18, 1.27, 1.19) is sustained to said mast structure (1.5, 2.1, 3.1) by at least one horizontally projecting component (1.9), preferably two horizontally projecting components (1.9), and most preferably one horizontally projecting element (1.9) attached to each of said two lenses (1.11, 1.26, 1.18, 1.27, 1.19).

Said sets of Plano-convex/convex lenses (1.11, 1.26, 1.18, 1.27, 1.19) are positioned just over the entire top cross-sectional view of said inner 45 degree inclined flat mirrors (1.8), and just under the entire lower cross-sectional view of said inclined flat mirrors (1.3), hence receiving and concentrating all the light reflected by said inclined mirrors (1.3).

Said sets of Plano-convex/convex lenses (1.11, 1.26, 1.18, 1.27, 1.19) comprise a layer of an opaque material (1.4, 1.16) around both lenses (1.11, 1.26, 1.18, 1.27, 1.19) which should preferably be attached to said members (1.9), which project vertically downwards from the upper surface of the upper Plano-convex lens (1.26, 1.18) to a position which is lower than the lower surface of the lower Plano-convex/convex lens (1.27, 1.19), such that said opaque material surface (1.4, 1.16) absorbs any undesired incident light from both upper (1.26, 1.18) and lower (1.27, 1.19) Plano-convex/convex lenses (1.26, 1.18, 1.27, 1.19).

Said lowest set of lenses (1.18, 1.19) comprises two Plano-convex lenses (1.18, 1.19) mounted on top of each other if the light rays should be refracted from the sides across said Plano-convex lenses (1.18, 1.19), but which comprises two convex lenses (1.18, 1.19) mounted on top of each other if the light rays should be refracted from along all four sides of said Plano-convex lenses (1.18, 1.19).

Said flat inclined collection mirrors (1.3) are inclined according to the sun's height and their inclinational orientation is changed by an electric actuator positioned at the pivot at the top of each of said inclined mirrors (1.3), thus always reflecting the solar rays (1.12) vertically downwards towards said Plano-convex/convex lenses (1.11, 1.26, 1.18, 1.27, 1.19) situated below these (1.3).

The solar ray concentration system comprises sets of components (1.3, 1.1, 1.6, 1.8, 1.28) mounted exactly on top of each other, and attached to said mast (1.5,2.1, 3.1), therefore comprising a structure which projects vertically (1.5, 2.1, 3.1), such that each of said sets of components (1.3, 1.1, 1.6, 1.8, 1.28) comprises said flat inclined mirror (1.3), over said set of two Plano-convex/convex lenses (1.11, 1.26, 1.27, 1.18, 1.19), over said inner 45 degree inclined flat mirror (1.8), which is positioned beside said outer 45 degree inclined flat mirror (1.6), hence forming a vertical light ray collection and concentration system.

The solar ray concentration system comprises a 45 degree inclined mirror flat mirror (1.21), preferably comprising an inward curved geometry (2.3), and most preferably comprising a concave geometry (3.3), which faces partly upwards and partly towards said mast structure (1.5,2.1,3.1), and whose top cross-sectional view is positioned just under the centre area of the lowest Plano-convex/convex lens (1.19).

The solar ray concentration system comprises a member (1.22, 2.5, 3.5, 1.23, 2.6, 3.6) which connects said mirror (1.21,2.3, 3.3) to said vertical mast structure (1.5, 2.1, 3.1), which comprises a horizontally projecting member (1.23, 2.6, 3.6) from said mast structure (1.5, 2.1, 3.1) until the centre of the top view of said mirror (1.21, 2.3, 3.3), which connects to a vertically upward projecting member (1.22,2.5, 3.5) which connects said mirror (1.21,2.3, 3.3) to said horizontally projecting member (1.23,2.6, 3.6).

The solar ray concentration system comprises a 45 degree inclined flat mirror (1.20), preferably an outward curved surfaced mirror (2.2), and most preferably a convex shaped surfaced mirror (3.2), which is positioned inside the lower volume of said mast structure (1.5, 2.1,3.1) and which faces partly horizontally towards an opening geometry through said mast structure (1.5, 2.1, 3.1), and so faces straight towards said mirror (1.21,2.3,3.3), and which also faces partly downwards towards a pipe (1.25, 2.7, 3.7) which is embedded in said mast structure (1.5, 2.1, 3.1), in which the reflected concentrated light rays are driven towards flowing water, which said rays hence convert into steam to drive turbines and generate electricity.

The solar ray concentration system comprises a rotational system (1.24, 2.4, 3.4) which comprises an electric motor which rotates said mast structure (1.5, 2.1, 3.1) around its own central axis (1.7), hence comprising a rotational basement structure (1.24, 2.4, 3.4) at the lower part of said mast (1.5, 2.1, 3.1), which is fixed and attached to said mast structure (1.5, 2.1, 3.1), such that said collection mirrors (1.3) can always be orientated towards the sun, no matter where the sun is positioned, such that preferably, said embedded pipe (1.25) inside said mast structure (1.5) projects downwards to a vertical pipe (1.13) which is embedded in the ground below said basement structure (1.24).

The solar ray concentration system is designed such that said 45 degree inclined flat mirrors (1.6, 1.8) attach to said mast structure (1.5, 2.1, 3.1) by each of said two horizontally projecting members (1.28), which are being positioned at the two end sides of said oppositely positioned flat mirrors (1.6, 1.8), such that these (1.6, 1.8) are positioned between said lower Plano-convex/convex lenses (1.11, 1.26, 1.18, 1.27, 1.19) and said lower flat inclined reflecting mirror (1.3), such that said two 45 degree inclined flat mirrors (1.6, 1.8) have the same length as that of said Plano-convex/convex lenses (1.11, 1.26, 1.18, 1.27, 1.19) and said inclined flat collection mirrors (1.3), and are positioned exactly in the same horizontal position as said lenses (1.11, 1.26, 1.18, 1.27, 1.19).

The solar ray concentration system is designed such that said mirrors (1.3, 1.6, 1.8, 1.20, 1.21), including said flat inclined collection mirrors (1.3), said two 45 degree angled oppositely facing mirrors (1.6, 1.8), said mirror (1.21) and said mirror (1.20), comprise all rectangular shapes, such that these (1.3, 1.6, 1.8, 1.20, 1.21) comprise rectangular geometries when viewed opposite to the central surfaces of these (1.3, 1.6, 1.8, 1.20, 1.21).

The solar ray concentration system is designed such that said 45 degree inclined mirrors (1.6, 1.8) are positioned such that said outer 45 degree inclined reflection mirrors (1.6) are positioned closer to said mast structure (1.5, 2.1, 3.1) than said inner 45 degree inclined mirrors (1.8), such that said inner 45 degree inclined mirrors (1.8) partly project towards said mast structure (1.5, 2.1, 3.1) and partly upwards towards the Plano-convex/convex lenses (1.11, 1.26, 1.18, 1.27, 1.19), while said outer 45 degree inclined mirrors (1.6) partly project downwards towards the Plano-convex/convex lenses (1.11, 1.26, 1.18, 1.27, 1.19) and partly horizontally away from said mast structure (1.5, 2.1, 3.1) towards said inner 45 degree inclined mirror (1.8), therefore reflecting and driving said concentrated light rays behind said inclined collection mirrors (1.3), and downwards towards the inner side of said upper Plano-convex/convex lens (1.26, 1.18) of said next lower set of components down said mast structure (1.5, 2.1, 3.1), such that said inclined collection mirrors (1.3) are sustained by a pivot which is attached to the outer far end of said horizontally projecting members (1.28).

Said solar ray concentration system comprises a plurality of systems which are mounted on top of the other down said mast (1.5) from top to bottom, in which a flat collection mirror (1.29) is positioned outwards and sustained by an electric motor actuated rotational system (1.30) which can rotate said mirror (1.29) with a rotational pivot line which is perpendicular to the mast's (1.5) direction of projection, and which is (1.29) positioned exactly in front of an inner flat collection mirror (1.3, 1.10) which faces outwards from said mast (1.5), such that said rotational system (1.30) connects to the bottom of said flat mirror (1.29), which is in turn connects to the outward top of a vertical member (1.4) which connects these (1.29, 1.30) to the lower convex lens structure (1.26, 1.27) and the lenses' (1.26, 1.27) sustaining members (1.9). Said outward top position is situated at the top of the vertical member (1.4) which sustain the convex lenses (1.18, 1.19, 1.26, 1.27), and as far outward from the mast structure (1.5) as possible.

Therefore, one of said collection mirrors (1.29) is positioned in front of each of said systems which comprises an inner flat collection mirror (1.3, 1.10) which is sustained by an electric motor actuated rotary system (1.2, 1.14) at the top end of said flat mirror (1.3, 1.10) and which is sustained by two top positioned horizontal members (1.28) positioned at each side, such that said outer flat collection mirror (1.29) is constantly oriented to reflect the solar rays (1.12) towards a horizontal direction (1.17) towards the vertical mast (1.5) which sustains said structure.

So, if the solar rays (1.12) project at angles higher than 45 degrees to the ground, said mirror (1.29) reflects said solar rays (1.12) to the inner solar collection mirror (1.3, 1.10), which is inclined at 45 degrees in order to reflect these (1.12) at 45 degrees vertically downwards, and such that said outer collection mirror (1.29) can be rotated such that the surfaces of said mirrors project perpendicularly to the solar rays when said rays project at angles lower than 45 degrees to the ground, all this being controlled by a centralised computerised control system.

Said solar ray concentration system is comprised of a plurality of systems which are mounted on top of the other down said mast (1.5) from top to bottom, and in which a flat collection mirror (1.29) is positioned outwards and sustained by an electric motor actuated rotational system (1.30) which connects to the bottom of said flat mirror (1.29), which is in turn connects to the vertical member (1.4) which sustains said convex lenses (1.18, 1.19, 1.26, 1.27), and which connects these (1.29, 1.30) to the horizontal member's structure (1.9), such that said collection mirror (1.29) is positioned in front of each of said systems, which comprises a flat collection mirror (1.3, 1.10) which is sustained by an electric motor actuated rotational system (1.2, 1.14) positioned at the top end of said flat mirror (1.3, 1.10) and which is sustained by two top positioned horizontal members (1.28) positioned at each side.

Said solar ray concentration system is comprised such that said outer flat collection mirror (1.29) is constantly oriented to reflect the solar rays (1.12) towards a horizontal direction (1.17) towards the vertical mast (1.5) which sustains said structure, such that if the solar rays (1.12) project at angles high than 45 degrees to the ground, said mirror (1.29) reflects said solar rays (1.12) to the inner solar collection mirror (1.3, 1.10), which is inclined at 45 degrees in order to reflect these (1.12) at 45 degrees vertically downwards.

Said solar ray concentration system is comprised such that said outer flat collection mirror (1.29) is positioned at the same angle as the angle of projection of the solar rays (1.12) to the ground, such that said rays are projected to the inner flat collection mirrors (1.3, 1.10) which reflect said solar rays (1.12) directly vertically downwards, all this being programmed to the computer control unit which controls the rotational actuators (1.14, 1.30) when the solar rays (1.12) project at an angle of 45 degrees or lower to the ground.

Said solar ray concentration system is comprised such that said outer flat collection mirrors (1.29) and its connecting members (1.4, 1.9) and rotational systems (1.30) are positioned on top of each other, each (1.29) at the same distance from each other and from the mast structure (1.5) which sustains the set solar ray concentration systems.

Said solar ray concentration system is comprised such that said inner flat collection mirror (1.3, 1.10) is constantly inclined at an angle of 45 degrees, facing partly horizontally away from the mast structure (1.5) and partly vertically downwards when said outer flat collection mirror (1.29) initially reflects the incoming solar rays (1.12) towards said inner flat collection mirror (1.3, 1.10).

Said solar ray concentration system is comprised such that said outer collection mirrors (1.29) are positioned at a greater horizontal distance from the main structural mast (1.5) than the inner collection mirrors (1.3, 1.10), such that said outer collection mirrors (1.29) comprise a length which spans to the upper positioned horizontal members (1.28) when said mirror (1.29) is tilted at its highest inclination angle compared to the ground level.

The outer collection mirror (1.29) is inclined such that it will always reflect the solar rays towards a horizontal direction and towards the inner flat mirror (1.3, 1.10). This however will occur only when the solar rays (1.12) shine at angles greater than 45 degrees to the ground. All the actuators (1.14, 1.30) of both inner (1.3, 1.10) and outer (1.29) collection mirrors are controlled by a centralised computerised control unit. The outer flat collection mirrors (1.29) are sustained form the lower ends. The length of the outer flat mirror (1.29) is such that the solar rays (1.12) which are reflected by it (1.29) will always be fully directed to the inner mirror (1.3, 1.10) when being inclined at 45 degrees, such that said mirror (1.29) will be as vertically high as the inner mirror (1.3, 1.10) when said inner mirror (1.3, 1.10) is inclined at 45 degrees. The inner mirror's (1.3, 1.10) length is such that all rays which are reflected by it (1.3, 1.10) will always be directed vertically downwards towards the concave mirror (1.18, 1.19, 1.26, 1.27) positioned under it (1.3, 1.10).

The rotary actuators (1.30) of the outer mirrors (1.29) constantly rotate said outer mirrors (1.29) in order to reflect and drive the solar rays horizontally towards the inner mirror (1.3, 1.10). The orientation which is actuated by the actuators (1.30) is fully computer controlled for the actuation (1.30) of each outer mirror (1.29).

The outer mirror (1.29) offers the advantage that a higher surface area will be available for solar ray collection and reflection when the solar rays project at angles greater than 45 degrees to the ground. This system will therefore increase the intensity of the solar rays reflected when the sun shines at high angles during the peak solar periods of the day, hence increasing significantly the intensity of the light rays, and hence maximising the system's power generation and energy generation efficiency.

When the solar rays (1.12) project at angles which are lower than 45 degrees to the ground, the computerised control unit is programmed to ensure that the surface of said outer flat collection mirrors (1.29) are inclined at exactly 90 degrees to the direction of projection of the solar rays (1.12), hence positioning said outer mirrors (1.29) exactly perpendicular to the direction of projection of the solar rays. The purpose of this system feature is that this will avoid the outer mirrors (1.29) to generate any shading on the lower inner mirror (1.3, 1.10) when the solar rays (1.12) project at shallow angles, hence maximising solar ray caption and reflection, and therefore maximising the system's energy generation efficiency.

Any shading produced by the outer mirrors (1.29) would impede part of the solar rays (1.12) to project on the inner mirrors (1.3, 1.10) when the solar rays project at shallow angles, hence reducing the solar ray reflection efficiency, and hence reducing the system's power generation efficiency.

The cavities into which the concentrated solar rays travel horizontally comprise a horizontally projecting member (1.31, 2.8, 3.8), which is positioned along the top of said horizontally projected light rays, and projects until the inner edge of the lowest positioned lenses (1.19), in order to impede any falling residue from entering into the central duct (1.25, 2.7, 3.7) into which said concentrated light rays are vertically driven down the lower pipe area (1.13) onto the flowing water (1.36, 2.13, 3.13).

The point at which the flowing liquid water is evaporated (1.36, 2.13, 3.13), comprises the concentrated light rays, which can reach extremely high temperatures when reaching said flowing water (1.36, 2.13, 3.13). This means that said solar ray concentration system can be used to separate the flowing liquid water into oxygen and hydrogen, because the temperatures of the light rays can reach very high temperatures and pressures if the tower mast (1.5) is high enough and comprises a high enough quantity of collection mirrors (1.3, 1.10, 1.29). In that case, the water evaporation area (1.36, 2.13, 3.13) comprises two evacuation tubes which drive oxygen and hydrogen separately into the required storage areas, to be used for industrial applications, or as fuels for applications such as space propulsion, aircraft propulsion or road vehicle propulsion. Such a system may hence be installed near to ports and airports in order to supply said ports and airports with power, oxygen and hydrogen.

Said solar ray concentration system can isolate hydrogen and oxygen separately simultaneously, provided that both temperatures and pressures are high enough when said liquid water (3.9) flows through the evaporation area (3.13) of said system, due to the extremely high temperatures of said concentrated light rays.

Said system can also be used to supply hydrogen fuel to airports for use as aerospace propulsion fuel, to train stations to use said fuel for railway propulsion applications, as well as to petrol stations to use said fuel for road vehicle applications, or to ports and harbours to use said fuel for offshore propulsion applications, as well as industrial applications, particularly for the chemical and manufacturing industries.

The power generation system comprised in this invention can be comprised on barges, ships, pontoons or any floating vessel, as said system can collect the water (1.32, 2.9, 3.9) form the sea, lake or river (1.32, 2.9, 3.9) by gravity. Said water (1.32,2.9,3.9) flows by gravity through a downward inclined pipe (1.35, 2.12, 3.12) until said water (1.32, 2.9, 3.9) reaches the evaporation area (1.36, 2.13, 3.13) positioned below the pipe (1.13, 1.25, 2.7, 3.7) which drive the concentrated solar rays. This means that the water (1.32, 2.9, 3.9) will evaporate when flowing through the evaporation area (1.36, 2.13, 3.13) and be driven as steam through an upward inclined pipe (1.37, 2.14, 3.14) in order to drive turbines, which will in turn drive generators to generate electricity.

A water flow control gate (1.33, 2.10, 3.10) is positioned at the inlet of the air flow into the system, in order to control the water flow to be evaporated at said evaporation area (1.36, 2.13, 3.13) according to the solar ray intensity. Said system is controlled by a solar ray intensity sensor positioned on an upward position, preferably at the top of the tower mast (1.5) which sustains said solar ray concentration system. Said sensor feeds all the information into a computerised controller. The commands pass from a controller to an actuator which actuates said water flow control gate (1.33, 2.10, 3.10).

Said water flow control gate is housed in a hollow housing (1.34, 2.11, 3.11) which can house said gate (1.33, 2.10, 3.10) partially or totally according to the solar ray intensity. If the solar ray intensity is at its highest, said gate (1.33, 2.10, 3.10) will remain open to its maximum level, hence being used inside said hollow chamber (1.34, 2.11, 3.11). If the solar ray intensity is zero during times such as during the night, said gate (1.33,2.10, 3.10) will remain closed. Said gate (1.33, 2.10, 3.10) is positioned above the upper wall of the intake pipe (1.35, 2.12, 3.12) in order for it to fall down passively by gravity if there is a blackout in the power supply to the actuation system of said gate (1.33, 2.10, 3.10) for any unscheduled reason.

The power generation system comprised in this invention can be positioned beside any sea, lake, river or water basin, as the water (1.32, 2.9, 3.9) will flow towards the evaporation area (1.36, 2.13, 3.13) automatically by gravity. The power generation system concerned in this invention can be mounted over ground in order to reduce the construction and engineering costs of the project.

The most efficient form of concentrating the concentrated linear cross-sectioned light ray is by the use of a fully concave mirror (3.3) which reflects said light rays into a fully convex mirror (3.2) in order to re-orientate these into a fully vertical or horizontal path, such that these will finally be orientated fully vertically downwards in order to evaporate the flowing liquid water (3.9).

Said light ray concentration system comprises a concave mirror (3.3) which is oriented partly upwards and partly horizontally towards the mast (3.1) which sustains said mirror (3.3), such that the vertically downward driven light rays can be reflected and oriented by said mirror (3.3) towards said mast structure (3.1). The convex mirror (3.2) is positioned inside the top area of a cylindrical hollow geometry (3.7) positioned inside said mast structure (3.7), such that said convex mirror (3.2) recovers said concentrated solar rays through a hollow opening and reflects these such that said light rays are driven in a fully vertically downward path into said inner cylindrical hollow geometry (3.7) towards the liquid flowing water, which said highly concentrated light rays evaporate in order to drive turbines and generators, which will be used to generate steam in order to generate electricity.

The power generation system concerned in this invention can be positioned in a plurality of tower masts (1.5, 2.1, 3.1) which are positioned one beside the other (4.6) in parallel, such that each of said tower masts (4.6) comprises a liquid water supply pipe (4.5) being comprised under each of said masts (4.6). This configuration hence results in a system which comprises a set of parallel water pipes (4.5) which are positioned in parallel to each other (4.5), such that said towers masts (4.6) can each evaporate part of the water supplied by the main liquid water intake pipe (4.1, 4.2), which then redistributes said water supply into various pipes. This design will hence allow a much greater quantity of water to be evaporated simultaneously, such that a much greater quantity of steam will be driven via a steam collection pipe (4.9) from all evaporation pipes (4.5) to a single turbine (4.11), which will in turn drive generators to generate electricity.

The steam driving pipe (4.10) supplies the entire steam produced by the system to the turbine, which is then driven out of the system by the exhaust pipe (4.12). Said exhaust pipe (4.12) can be driven through a basin (4.13) of liquid water from the same water supply source, or another source such as a secondary cooling circuit (4.13) in order to liquefy said steam before of being released into the environment.

The liquid water is distributed into said parallel positioned pipes (4.5) by a distribution pipe (4.4). However, after being collected through the intake pipe (4.1), said water can be driven down by a vertically projecting pipe (4.2) into a water turbine (4.3) in order to generate a further electricity generation prior of being driven through said distribution pipe (4.4). This design will increase the power generation system's efficiency even further.

The tower masts (4.6) are constantly rotated by the means of an electric motor actuated rotational system (4.8) such that its mirrors and lenses (4.7) are always constantly positioned opposite to the solar rays, hence maximising solar ray concentration outputs.

All of the above said system features can be comprised on a space vehicle in order to supply power, such as satellites, space modules or space stations. Said features can also be comprised on a floating or fixed vessel by positioning said mast with all of the above said systems on said vessel, while using the vessel's inner hull to house the power generation equipment, as well as the water evaporation and supply circuits.

The power generation system comprised in this invention can also be comprised on space vehicles, including satellites, space stations, and spacecraft. The tower mast structure (1.5) can be attached to one of said space vehicle structures, such that it (1.5) can be oriented such that the collection mirrors (1.3, 1.10, 1.29) are positioned such that these (1.3, 1.10, 1.29) will collect and reflect the incoming solar rays (1.12) to upper convex lenses (1.26, 1.11). The orientation will be performed such that the surfaces of said collection mirrors (1.3, 1.10, 1.29) are always positioned constantly perpendicularly to the incoming solar rays (1.12). Said orientation will be performed according to said space structure's attitude and orientation to said solar rays (1.12). In this way, said power generation system can supply a large amount of power to a space structure, while using a cheaper system than ultra-sensitive photovoltaic cells, and which is not easily damaged by moving cosmic objects, in addition of not losing the accuracy of the solar collection efficiency over the years of usage while said system is in operation.

The tower mast structure (1.5, 2.1, 3.1, 4.6) of said power generation system rotates on a plane which is parallel to the ground level on which said power generation system is standing, and about an axis (1.7) which is comprised along the centre of the cross-sectional area of said mast beam structure (1.5, 2.1, 3.1, 4.6). This system is electronically actuated by an electric motor, and is controlled by a computer, in which the position of the sun in the horizon is programmed for each minute and each day for a length of at least one year. A solar clock which supplies solar position data at all times, can be also be comprised in said computer. The advantage of said design is that only one actuator is required to orientate said solar ray mirrors (1.3, 1.10, 1.29) opposite to the incoming solar rays (1.12). The rotational system also comprises a circular base (1.24, 2.4, 3.4, 4.8) at the bottom are of said tower mast structure (1.5, 2.1, 3.1, 4.6). Said base (1.24,2.4, 3.4,4.8) offers stability to said tower mast structure (1.5, 2.1, 3.1, 4.6).

The power generation system design comprised in this invention can be comprised on vessels such as boats, barges, pontoons or ships which are positioned offshore on rivers, lakes, seas, canals or water basins as previously mentioned. However, said system can not only generate power for supply to offshore applications, but can also supply power to other offshore vessels, or to the same vessel on which said system is positioned. This means that said power generation system, when being positioned or installed on board any type of vessel, can be used to supply power to the same vessel. Said power can be used for industrial applications, fishing, lighting, and propulsion applications, as well as to power the navigational instruments of said vessels. This means that comprising said power generation system on board a vessel can offer loads of advantages, not only for the offshore vessels or onshore buildings or installation nearby, but also to offer its own naturally fuelled propulsion system, which will be completely fuel less and emission less. Said vessel would therefore comprise its own energy to supply its entire propulsion and electricity utilisation needs.

Said power generation system can use synthetic oils, molten salt, or pressurised steam, which would flow through a pipe (1.36, 2.13, 3.13) under the concentrated light rays at the lower part of said tower mast structure (2.1, 3.1). Said design can be comprised on said power generation system comprised in this invention, whether comprised onshore, or offshore on a vessel, such as a ship, a barge, a boat, or a pontoon. In the case of the power generation system concerned using synthetic oil, molten salt or pressurised steam as a heat collection source from said concentrated light rays, a storage area for said synthetic oil, molten salt or pressurised steam is comprised, where said fluid can be stored, hence storing the heat transferred from said rays at a very high efficiency. Said storage tank connects to a steam generator, where a pump can drive said synthetic oil, molten salt or compressed steam to a steam generator, where it will generate steam, which will in turn drive a steam turbine, which will in turn drive a generator for the generation of electricity. If said steam turbine is not used, said storage tank can store the heat for a time period of a plurality of hours. With this design, offshore vessels could comprise the required energy to meet its electricity demand during both day and night periods.

Said primary circuit is used to drive synesthetic oil, compressed steam or molten salt, and can be comprised in a circuit comprising a plurality of pipes (4.5) which are each positioned in parallel to each other (4.5), such that each of said pipes (4.5) projects under one tower mast structure (1.5, 2.1, 3.1,4.6), hence collecting the heat from said concentrated solar rays. Said circuit would comprise a fluid distribution pipe (4.4) and a fluid collection pipe (4.9), such that said fluid is distributed between all tower mast structures (1.5, 2.1, 3.1, 4.6), but also in which the number of pipes is minimised, hence minimising construction and maintenance costs.

Said tower mast structure (1.5,2.1,3.1,4.6) can also be housed inside a transparent building which surrounds the entire tower mast structure (1.5, 2.1, 3.1, 4.6) from top to bottom. This design would impede any side movements of said tower mast structure (1.5, 2.1, 3.1, 4.6) due to high winds, hence guaranteeing the high accuracy of concentration of said solar rays at all times, even at times of strong winds or strong wind gales. The materials of said transparent housing can be transparent glass, transparent tempered glass, transparent Plexiglas, or transparent PVC plastic. Said building can house one mast structure (1.5, 2.1, 3.1, 4.6) inside it, or a plurality of said mast structures (1.5, 2.1, 3.1, 4.6), preferably if these (1.5, 2.1, 3.1, 4.6) are positioned one beside the other (1.5, 2.1, 3.1, 4.6), forming a linear pattern.

Said storage system comprises a storage tank, which connects via a circuit to a pipe (1.36, 2.13, 3.13, 4.5) which projects perpendicularly to said tower mast structure's (1.5, 2.1, 3.1, 4.6) vertical direction of projection, and projects as a pipe (1.36, 2.13, 3.13, 4.5) under said vertically projecting concentrated solar rays under said mast structure (1.5, 2.1, 3.1, 4.6). A pump situated into said pipe (1.36, 2.13, 3.13, 4.5) drives a fluid such as synthetic oil, molten salt or pressurised steam, through said pipe (1.36, 2.13, 3.13, 4.5) and under said concentrated light rays (1.36) prior of being driven back to said storage tank via a separate pipe, hence forming a circuit. Said storage tank stores the superheated fluid, and hence stores the heat transferred by said solar light rays inside said tank. Another circuit comprises a pump which is used to drive said superheated synthetic oil, molten salt or compressed steam through a steam generator, where said heat is transferred to liquid water, which is instantly converted into steam. Said liquid water flows through a separate tertiary circuit.

Said molten salt, synthetic oil or pressurised steam circuit, drives said fluid back to said storage tank by the means of a pump after being driven through said steam generator. Said cooled fluid is then driven back again under said tower mast structure (1.5, 2.1, 3.1, 4.6), and hence under said concentrated light rays in order to collect heat again. Said fluid flows as a superheated fluid back to said storage tank again. Said process is repeated over and over again during the operation of said system.

Said tertiary circuit drives liquid water by the means of a pump which is positioned along said tertiary circuit's pipe. Said tertiary circuit's pipe drives liquid water by the means of a pump which is comprised through said pipe. Said pipe therefore drives said water through said steam generator, where it collects the heat supplied by the superheated synthetic oil, molten salt or compressed steam. Said water is therefore instantly converted to steam when flowing through said steam generator. Said steam is then driven through the follow up section of said pipe to a steam turbine, where said steam converts its heat energy into kinetic energy. Said steam turbine drives a generator, which generates electricity with the kinetic energy of the steam, hence shaping a fully renewable and emissions free system, which relies solely on solar power for the entire generation of electricity.

Said steam generator functions as a heat exchanger, where said synesthetic oil, compressed steam or molten salt, transfers the heat to a flow of liquid water, which is converted into steam when collecting said heat from said other fluid. Both fluids are driven through separate pipes, which make two entirely separate circuits.

The storage tank can be used to supply heat energy to the water pipe during the night, where no solar rays are present, hence offering a continuous time period of supply of steam to the steam turbine, whether it is at night or during daytime. This design will therefore guarantee a constant electricity supply during both day and night, hence meeting the demand of said onshore or offshore vessel, or of said industrial installations, towns, or railways. Said steam turbine will therefore constantly drive said generators to constantly generate electricity during both daytime and night-time periods.

The water (2.9,3.9) flowing through said tertiary circuit can be collected from the sea, lake, river, canal, or water basin on which said vessel floats on if said power generation system is comprised offshore on an offshore vessel. Said water (2.9,3.9) can be the same as that on which said vessel is comprised, or that on which said vessel floats. If said vessel is comprised floating on salty water, such as sea water, said salt con be collected via a septate pipe situated in the evaporation area (1.36, 2.13, 3.13) under said tower mast structure (1.5, 2.1, 3.1, 4.6), or at the bottom of said steam generator's vessel. Said salt can then be driven to a storage area, where it can be collected for use in industry, food, or any other convenient applications.

Said water can flow via gravity down said tertiary circuit's pipe, into which a water flow control gate can also be comprised. A condenser can be comprised to convert said steam back into water again after the heat transferring process and the driving of the steam turbine, a process which occurs prior of driving said water back to said steam generator. When said water transfers the heat from said fluid such as synthetic oil, compressed steam or molten salt and then drives said steam turbine, said steam can be condensed into said condenser, and be driven back to said steam generator, hence fully completing said tertiary circuit's loop.

In the case of said solar ray concentration system, said elements stated above are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

Said solar ray concentration system is used to supply power and/or supplies heat and/or supplies water and/or is comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, and dockyards.

So, the present invention comprises a solar ray concentration system which comprises flat mirrors (1.3) which can be oriented and actuated by a pivot connecting the upper part of said mirrors (1.3) with a horizontally projecting member(s) (1.1), which also sustain(s) a set of two oppositely positioned flat mirrors (1.6, 1.8) which are each inclined at 45 degree angles, so that the inner 45 degree inclined mirrors (1.8) partly project towards said mast structure (1.5,2.1, 3.1) and partly upwards towards the Plano-convex/convex lenses (1.11, 1.26, 1.18, 1.27, 1.19), while said outer 45 degree inclined mirrors (1.6) partly project downwards towards the Plano-convex/convex lenses (1.11, 1.26, 1.18, 1.27, 1.19) and partly horizontally away from said mast structure (1.5, 2.1, 3.1) towards said inner 45 degree inclined mirror (1.8), which are in any case mounted on top of a set of two Plano-convex lenses (1.11, 1.26, 1.27), whose horizontal surface spans to fully cover the outer 45 degree inclined mirror (1.6) and said collection mirror (1.3), so that said lenses (1.11, 1.26, 1.27) are both surrounded by an opaque layer of solid material (1.4) which surrounds the vertical distance between said two lenses (1.11, 1.26, 1.27), which are mounted on top of each other and are all mounted to a vertical mast (1.5, 2.1, 3.1) which can be rotated about its central axis (1.7), such that the surface of the lower Plano-convex lens (1.27) is approximately positioned along or below the focal point of the concentrated rays by said upper Plano-convex lens (1.26), such that said system comprises a set of systems mounted on top of each other, with each of said systems comprising a flat mirror (1.3) mounted on top of said set of two Plano-convex lenses (1.11, 1.26, 1.27), mounted on top of said set of opposite facing 45 degree inclined mirrors (1.6, 1.8), and in which the lowest of said systems preferably comprises convex lenses (1.19, 1.18) replacing said Plano-convex lenses (1.11, 1.26, 1.27), such that a 45 degree inclined mirror (1.21), which preferably comprises a inwardly curved (2.3) or concave surface (3.3), is mounted to said mast (1.5, 2.1, 3.1), which in turn comprises an oppositely facing 45 degree inclined mirror (1.20), preferably oppositely curved (2.2) to said front mirror (2.3), and most preferably comprising an outwardly curved (2.2) or convex surface (3.2), inside said mast's structure (1.11, 1.26, 1.27), such that the light rays are finally reflected downwards into a vertical pipe (1.25, 2.7, 3.7) embedded inside the lower volume of said mast's structure (1.11, 1.26, 1.27).

The preferred embodiments are the following.

A solar ray concentration system according to the above which comprises a plurality of systems which are mounted on top of the other down said mast (1.5) from top to bottom, and in which a flat collection mirror (1.29) is positioned outwards and sustained by an electric motor actuated rotational system (1.30) which connects to the bottom of said flat mirror (1.29), which is in turn connects to a vertical member (1.4) which connects these (1.29, 1.30) to the lower convex lens structure (1.26, 1.27) and the lenses' (1.26, 1.27) sustaining members (1.9), such that one of said collection mirrors (1.29) is positioned in front of each of said systems which comprises an inner flat collection mirror (1.3, 1.10) which is sustained by an electric motor actuated rotary system (1.2, 1.14) at the top end of said flat mirror (1.3, 1.10) and which is sustained by two top positioned horizontal members (1.28) positioned at each side, such that said outer flat collection mirror (1.29) is constantly oriented to reflect the solar rays (1.12) towards a horizontal direction (1.17) towards the vertical mast (1.5) which sustains said structure, such that if the solar rays (1.12) project at angles higher than 45 degrees to the ground, said mirror (1.29) reflects said solar rays (1.12) to the inner solar collection mirror (1.3, 1.10), which is inclined at 45 degrees in order to reflect these (1.12) at 45 degrees vertically downwards, and such that said outer collection mirror (1.29) can be rotated such that the surfaces of said mirrors project perpendicularly to the solar rays when said rays project at angels lower than 45 degrees to the ground, all this being controlled by a centralised computerised control system.

A solar ray concentration system according to the above in which said members (1.1, 1.28) which support said inclined flat mirrors (1.3) are a separate structure at the top of said mast (1.1), or a set of at least one, preferably two horizontally projecting members (1.28) which projects outwards oppositely to said mast (1.5,2.1, 3.1), and which sustains said inner and outer 45 degree inclined flat mirrors (1.6, 1.8) in the cases of the other (lower) flat mirrors (1.3), such that said inclined flat mirrors (1.3) comprise a pivot attached to the end of said horizontally projecting members (1.1, 1.28), such that said oppositely facing 45 degree flat mirrors (1.6, 1.8) are supported together by at least one (1.28), preferably two (1.28), horizontally projecting members (1.28), which support these (1.6, 1.8) from said mast structure (1.5, 2.1, 3.1), such that said inner 45 degree inclined flat mirror (1.8) partly faces upwards and partly faces horizontally and towards said mast (1.5, 2.1, 3.1), whereas said outer oppositely facing 45 degree inclined flat mirror (1.6) faces partly to said inner 45 degree inclined mirror (1.8), and partly downwards.

A solar ray concentration system according to the above in which said outer 45 degree inclined flat mirrors (1.6) are positioned on top of the area of the Plano-convex/convex lenses (1.11, 1.26, 1.27) which is the furthest apart from said mast (1.5,2.1, 3.1), such that said mirrors (1.6) are on top of the respective lenses (1.11, 1.26, 1.27), and can hence reflect light downwards on said lenses (1.11, 1.26, 1.27), but behind of said flat inclined collection mirrors of (1.3), such that said sets of Plano-convex/convex lenses (1.11, 1.26, 1.27) comprise one Plano-convex/convex lens (1.26, 1.18) mounted on top of another Plano-convex/convex lens (1.27, 1.19), such that each of said sets of lenses (1.11, 1.26, 1.18, 1.27, 1.19) is sustained to said mast structure (1.5, 2.1, 3.1) by at least one horizontally projecting component (1.9), preferably two horizontally projecting components (1.9), and most preferably one horizontally projecting element (1.9) attached to each of said two lenses (1.11, 1.26, 1.18, 1.27, 1.19).

A solar ray concentration system according to the above in which said sets of Plano-convex/convex lenses (1.11, 1.26, 1.18, 1.27, 1.19) are positioned just over the entire top cross-sectional view of said inner 45 degree inclined flat mirrors (1.8), and just under the entire lower cross-sectional view of said inclined flat mirrors (1.3), hence receiving and concentrating all the light reflected by said inclined mirrors (1.3), such that said sets of Plano-convex/convex lenses (1.11, 1.26, 1.18, 1.27, 1.19) comprise a layer of an opaque material (1.4, 1.16) around both lenses (1.11, 1.26, 1.18, 1.27, 1.19) which should preferably be attached to said members (1.9), which project vertically downwards from the upper surface of the upper Plano-convex lens (1.26, 1.18) to a position which is lower than the lower surface of the lower Plano-convex/convex lens (1.27, 1.19), such that said opaque material surface (1.4, 1.16) absorbs any undesired incident light from both upper (1.26, 1.18) and lower (1.27, 1.19) Plano-convex/convex lenses (1.26, 1.18, 1.27, 1.19).

A solar ray concentration system according to the above in which said lowest set of lenses (1.18, 1.19) comprises two Plano-convex lenses (1.18, 1.19) mounted on top of each other if the light rays should be refracted from the sides across said Plano-convex lenses (1.18, 1.19), but which comprises two convex lenses (1.18, 1.19) mounted on top of each other if the light rays should be refracted from along all four sides of said Plano-convex lenses (1.18, 1.19), such that said flat inclined collection mirrors (1.3) are inclined according to the sun's height and their inclinational orientation is changed by an electric actuator positioned at the pivot at the top of each of said inclined mirrors (1.3), thus always reflecting the solar rays (1.12) vertically downwards towards said Plano-convex/convex lenses (1.11, 1.26, 1.18, 1.27, 1.19) situated below these (1.3).

A solar ray concentration system according to the above which comprises sets of components (1.3, 1.1, 1.6, 1.8, 1.28) mounted exactly on top of each other, and attached to said mast (1.5, 2.1, 3.1), therefore comprising a structure which projects vertically (1.5, 2.1, 3.1), such that each of said sets of components (1.3, 1.1, 1.6, 1.8, 1.28) comprises said flat inclined mirror (1.3), over said set of two Plano-convex/convex lenses (1.11, 1.26, 1.27, 1.18, 1.19), over said inner 45 degree inclined flat mirror (1.8), which is positioned beside said outer 45 degree inclined flat mirror (1.6), hence forming a vertical light ray collection and concentration system, such that said solar ray concentration system comprises a 45 degree inclined flat mirror (1.21), preferably comprising an inward curved geometry (2.3), and most preferably comprising a concave geometry (3.3), which faces partly upwards and partly towards said mast structure (1.5,2.1, 3.1), and whose top cross-sectional view is positioned just under the centre area of the lowest Plano-convex/convex lens (1.19).

A solar ray concentration system according to the above which comprises a member (1.22, 2.5, 3.5, 1.23, 2.6, 3.6) which connects said mirror (1.21, 2.3, 3.3) to said vertical mast structure (1.5, 2.1, 3.1), which comprises a horizontally projecting member (1.23, 2.6, 3.6) from said mast structure (1.5, 2.1, 3.1) until the centre of the top view of said mirror (1.21, 2.3, 3.3), which connects to a vertically upward projecting member (1.22, 2.5, 3.5) which connects said mirror (1.21, 2.3, 3.3) to said horizontally projecting member (1.23, 2.6, 3.6), such that said solar ray concentration system comprises a 45 degree inclined flat mirror (1.20), preferably an outward curved surfaced mirror (2.2), and most preferably a convex shaped surfaced mirror (3.2), which is positioned inside the lower volume of said mast structure (1.5, 2.1, 3.1) and which faces partly horizontally towards an opening geometry through said mast structure (1.5,2.1, 3.1), and so faces straight towards said mirror (1.21, 2.3, 3.3), and which also faces partly downwards towards a pipe (1.25, 2.7, 3.7) which is embedded in said mast structure (1.5, 2.1, 3.1), in which the reflected concentrated light rays are driven towards flowing water, which said rays hence convert into steam to drive turbines and generate electricity.

A solar ray concentration system according to the above which comprises a rotational system (1.24, 2.4, 3.4) which comprises an electric motor which rotates said mast structure (1.5, 2.1, 3.1) around its own central axis (1.7), hence comprising a rotational basement structure (1.24, 2.4, 3.4) at the lower part of said mast (1.5,2.1,3.1), which is fixed and attached to said mast structure (1.5, 2.1, 3.1), such that said collection mirrors (1.3) can always be orientated towards the sun, no matter where the sun is positioned, such that preferably, said embedded pipe (1.25) inside said mast structure (1.5) projects downwards to a vertical pipe (1.13) which is embedded in the ground below said basement structure (1.24), such that said 45 degree inclined flat mirrors (1.6, 1.8) attach to said mast structure (1.5, 2.1, 3.1) by each of said two horizontally projecting members (1.28), which are being positioned at the two end sides of said oppositely positioned flat mirrors (1.6, 1.8), such that these (1.6, 1.8) are positioned between said lower Plano-convex/convex lenses (1.11, 1.26, 1.18, 1.27, 1.19) and said lower flat inclined reflecting mirror (1.3), such that said two 45 degree inclined flat mirrors (1.6, 1.8) have the same length as that of said Plano-convex/convex lenses (1.11, 1.26, 1.18, 1.27, 1.19) and said inclined flat collection mirrors (1.3), and are positioned exactly in the same horizontal position as said lenses (1.11, 1.26, 1.18, 1.27, 1.19).

A solar ray concentration system according to the above in which said mirrors (1.3, 1.6, 1.8, 1.20, 1.21), including said flat inclined collection mirrors (1.3), said two 45 degree angled oppositely facing mirrors (1.6, 1.8), said mirror (1.21) and said mirror (1.20), comprise all rectangular shapes, such that these (1.3, 1.6, 1.8, 1.20, 1.21) comprise rectangular geometries when viewed opposite to the central surfaces of these (1.3, 1.6, 1.8, 1.20, 1.21).

A solar ray concentration system according to the above in which said 45 degree inclined mirrors (1.6, 1.8) are positioned such that said outer 45 degree inclined reflection mirrors (1.6) are positioned closer to said mast structure (1.5, 2.1, 3.1) than said inner 45 degree inclined mirrors (1.8), such that said inner 45 degree inclined mirrors (1.8) partly project towards said mast structure (1.5, 2.1, 3.1) and partly upwards towards the Plano-convex/convex lenses (1.11, 1.26, 1.18, 1.27, 1.19), while said outer 45 degree inclined mirrors (1.6) partly project downwards towards the Plano-convex/convex lenses (1.11, 1.26, 1.18, 1.27, 1.19) and partly horizontally away from said mast structure (1.5, 2.1, 3.1) towards said inner 45 degree inclined mirror (1.8), therefore reflecting and driving said concentrated light rays behind said inclined collection mirrors (1.3), and downwards towards the inner side of said upper Plano-convex/convex lens (1.26, 1.18) of said next lower set of components down said mast structure (1.5, 2.1, 3.1), such that said inclined collection mirrors (1.3) are sustained by a pivot which is attached to the outer far end of said horizontally projecting members (1.28).

A solar ray concentration system according to the above which is comprised on vessels of any type, including ships, boats, barges, pontoons, or any other type of surface vessels, such that said solar ray concentration system can be mounted over ground and take water (1.32, 2.9, 3.9) from a nearby water basin (1.32, 2.9, 3.9) such as a sea, a lake, a river, a or any other basin from an onshore or offshore surface, depending on the construction convenience according to the geography of the place to install said systems.

A solar ray concentration system according to the above which comprises a pipe (1.35, 2.12, 3.12) into which water (1.32, 2.9, 3.9) is driven by gravity, such that said water (1.32, 2.9, 3.9) evaporates when passing under said vertically driven concentrated solar rays into a lower hollow pipe (1.13, 1.25, 2.7, 3.7), hence preferably comprising a hydrogen isolation system due to the high temperatures of said concentrated solar rays, which drives said hydrogen and oxygen for fuel or chemical use to petrol station, ports, airport and railway stations for aerospace, train, road or offshore vehicle propulsion, such that said system comprises a set of parallel positioned pipes (4.5) into which said liquid water (1.32,2.9,3.9) is distributed by a distribution pipe (4.4) and then steam is collected by a collection pipe (4.9) prior of driving said water into a steam turbine (4.11) and then finally into a cooling area (4.12) comprising a secondary water basin or circuit (4.13) comprised around said pipe (4.12), in which preferably a water turbine (4.3) is comprised along said water collection pipe (4.1) to maximise electricity generation from water falling by gravity through said collection pipe (4.2), which comprises a computerised water flow control gate (1.33, 2.10,3.10) at the intake pipe (1.35, 2.12, 3.12) to control water flow into the system according to a solar ray intensity sensor's data.

A solar ray concentration system according to the above in which said elements stated above are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

A solar ray concentration system according to the above which is used to supply power and/or supply heat and/or supply hot water and/or comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, ships, boats, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports and dockyards.

## Claims

1. A solar ray concentration system which comprises flat mirrors (1.3) which can be oriented and actuated by a pivot connecting the upper part of said mirrors (1.3) with a horizontally projecting member(s) (1.1), which also sustain(s) a set of two oppositely positioned flat mirrors (1.6, 1.8) which are each inclined at 45 degree angles, so that the inner 45 degree inclined mirrors (1.8) partly project towards said mast structure (1.5, 2.1, 3.1) and partly upwards towards the Plano-convex/convex lenses (1.11, 1.26, 1.18, 1.27, 1.19), while said outer 45 degree inclined mirrors (1.6) partly project downwards towards the Plano-convex/convex lenses (1.11, 1.26, 1.18, 1.27, 1.19) and partly horizontally away from said mast structure (1.5, 2.1, 3.1) towards said inner 45 degree inclined mirror (1.8), which are in any case mounted on top of a set of two Plano-convex lenses (1.11, 1.26, 1.27), whose horizontal surface spans to fully cover the outer 45 degree inclined mirror (1.6) and said collection mirror (1.3), so that said lenses (1.11, 1.26, 1.27) are both surrounded by an opaque layer of solid material (1.4) which surrounds the vertical distance between said two lenses (1.11, 1.26, 1.27), which are mounted on top of each other and are all mounted to a vertical mast (1.5, 2.1, 3.1) which can be rotated about its central axis (1.7), such that the surface of the lower Plano-convex lens (1.27) is approximately positioned along or below the focal point of the concentrated rays by said upper Plano-convex lens (1.26), such that said system comprises a set of systems mounted on top of each other, with each of said systems comprising a flat mirror (1.3) mounted on top of said set of two Plano-convex lenses (1.11, 1.26, 1.27), mounted on top of said set of opposite facing 45 degree inclined mirrors (1.6, 1.8), and in which the lowest of said systems preferably comprises convex lenses (1.19, 1.18) replacing said Plano-convex lenses (1.11, 1.26, 1.27), such that a 45 degree inclined mirror (1.21), which preferably comprises a inwardly curved (2.3) or concave surface (3.3), is mounted to said mast (1.5,2.1,3.1), which in turn comprises an oppositely facing 45 degree inclined mirror (1.20), preferably oppositely curved (2.2) to said front mirror (2.3), and most preferably comprising an outwardly curved (2.2) or convex surface (3.2), inside said mast's structure (1.11, 1.26, 1.27), such that the light rays are finally reflected downwards into a vertical pipe (1.25, 2.7, 3.7) embedded inside the lower volume of said mast's structure (1.11, 1.26, 1.27).

2. A solar ray concentration system according to Claim 1 which comprises a plurality of systems which are mounted on top of the other down said mast (1.5) from top to bottom, and in which a flat collection mirror (1.29) is positioned outwards and sustained by an electric motor actuated rotational system (1.30) which connects to the bottom of said flat mirror (1.29), which is in turn connects to a vertical member (1.4) which connects these (1.29, 1.30) to the lower convex lens structure (1.26, 1.27) and the lenses' (1.26, 1.27) sustaining members (1.9), such that one of said collection mirrors (1.29) is positioned in front of each of said systems which comprises an inner flat collection mirror (1.3, 1.10) which is sustained by an electric motor actuated rotary system (1.2, 1.14) at the top end of said flat mirror (1.3, 1.10) and which is sustained by two top positioned horizontal members (1.28) positioned at each side, such that said outer flat collection mirror (1.29) is constantly oriented to reflect the solar rays (1.12) towards a horizontal direction (1.17) towards the vertical mast (1.5) which sustains said structure, such that if the solar rays (1.12) project at angles higher than 45 degrees to the ground, said mirror (1.29) reflects said solar rays (1.12) to the inner solar collection mirror (1.3, 1.10), which is inclined at 45 degrees in order to reflect these (1.12) at 45 degrees vertically downwards, and such that said outer collection mirror (1.29) can be rotated such that the surfaces of said mirrors project perpendicularly to the solar rays when said rays project at angels lower than 45 degrees to the ground, all this being controlled by a centralised computerised control system.

3. A solar ray concentration system according to Claims 1 to 2 in which said members (1.1, 1.28) which support said inclined flat mirrors (1.3) are a separate structure at the top of said mast (1.1), or a set of at least one, preferably two horizontally projecting members (1.28) which projects outwards oppositely to said mast (1.5,2.1, 3.1), and which sustains said inner and outer 45 degree inclined flat mirrors (1.6, 1.8) in the cases of the other (lower) flat mirrors (1.3), such that said inclined flat mirrors (1.3) comprise a pivot attached to the end of said horizontally projecting members (1.1, 1.28), such that said oppositely facing 45 degree flat mirrors (1.6, 1.8) are supported together by at least one (1.28), preferably two (1.28), horizontally projecting members (1.28), which support these (1.6, 1.8) from said mast structure (1.5, 2.1, 3.1), such that said inner 45 degree inclined flat mirror (1.8) partly faces upwards and partly faces horizontally and towards said mast (1.5, 2.1, 3.1), whereas said outer oppositely facing 45 degree inclined flat mirror (1.6) faces partly to said inner 45 degree inclined mirror (1.8), and partly downwards.

4. A solar ray concentration system according to Claims 1 to 3 in which said outer 45 degree inclined flat mirrors (1.6) are positioned on top of the area of the Plano-convex/convex lenses (1.11, 1.26, 1.27) which is the furthest apart from said mast (1.5, 2.1, 3.1), such that said mirrors (1.6) are on top of the respective lenses (1.11, 1.26, 1.27), and can hence reflect light downwards on said lenses (1.11, 1.26, 1.27), but behind of said flat inclined collection mirrors of (1.3), such that said sets of Plano-convex/convex lenses (1.11, 1.26, 1.27) comprise one Plano-convex/convex lens (1.26, 1.18) mounted on top of another Plano-convex/convex lens (1.27, 1.19), such that each of said sets of lenses (1.11, 1.26, 1.18, 1.27, 1.19) is sustained to said mast structure (1.5, 2.1, 3.1) by at least one horizontally projecting component (1.9), preferably two horizontally projecting components (1.9), and most preferably one horizontally projecting element (1.9) attached to each of said two lenses (1.11, 1.26, 1.18, 1.27, 1.19).

5. A solar ray concentration system according to Claims 1 to 4 in which said sets of Plano-convex/convex lenses (1.11, 1.26, 1.18, 1.27, 1.19) are positioned just over the entire top cross-sectional view of said inner 45 degree inclined flat mirrors (1.8), and just under the entire lower cross-sectional view of said inclined flat mirrors (1.3), hence receiving and concentrating all the light reflected by said inclined mirrors (1.3), such that said sets of Plano-convex/convex lenses (1.11, 1.26, 1.18, 1.27, 1.19) comprise a layer of an opaque material (1.4, 1.16) around both lenses (1.11, 1.26, 1.18, 1.27, 1.19) which should preferably be attached to said members (1.9), which project vertically downwards from the upper surface of the upper Plano-convex lens (1.26, 1.18) to a position which is lower than the lower surface of the lower Plano-convex/convex lens (1.27, 1.19), such that said opaque material surface (1.4, 1.16) absorbs any undesired incident light from both upper (1.26, 1.18) and lower (1.27, 1.19) Plano-convex/convex lenses (1.26, 1.18, 1.27, 1.19).

6. A solar ray concentration system according to Claims 1 to 5 in which said lowest set of lenses (1.18, 1.19) comprises two Plano-convex lenses (1.18, 1.19) mounted on top of each other if the light rays should be refracted from the sides across said Plano-convex lenses (1.18, 1.19), but which comprises two convex lenses (1.18, 1.19) mounted on top of each other if the light rays should be refracted from along all four sides of said Plano-convex lenses (1.18, 1.19), such that said flat inclined collection mirrors (1.3) are inclined according to the sun's height and their inclinational orientation is changed by an electric actuator positioned at the pivot at the top of each of said inclined mirrors (1.3), thus always reflecting the solar rays (1.12) vertically downwards towards said Plano-convex/convex lenses (1.11, 1.26, 1.18, 1.27, 1.19) situated below these (1.3).

7. A solar ray concentration system according to Claims 1 to 6 which comprises sets of components (1.3, 1.1, 1.6, 1.8, 1.28) mounted exactly on top of each other, and attached to said mast (1.5,2.1, 3.1), therefore comprising a structure which projects vertically (1.5, 2.1, 3.1), such that each of said sets of components (1.3, 1.1, 1.6, 1.8, 1.28) comprises said flat inclined mirror (1.3), over said set of two Plano-convex/convex lenses (1.11, 1.26, 1.27, 1.18, 1.19), over said inner 45 degree inclined flat mirror (1.8), which is positioned beside said outer 45 degree inclined flat mirror (1.6), hence forming a vertical light ray collection and concentration system, such that said solar ray concentration system comprises a 45 degree inclined flat mirror (1.21), preferably comprising an inward curved geometry (2.3), and most preferably comprising a concave geometry (3.3), which faces partly upwards and partly towards said mast structure (1.5, 2.1, 3.1), and whose top cross-sectional view is positioned just under the centre area of the lowest Plano-convex/convex lens (1.19).

8. A solar ray concentration system according to Claims 1 to 7 which comprises a member (1.22, 2.5, 3.5, 1.23,2.6,3.6) which connects said mirror (1.21, 2.3, 3.3) to said vertical mast structure (1.5, 2.1, 3.1), which comprises a horizontally projecting member (1.23, 2.6, 3.6) from said mast structure (1.5, 2.1, 3.1) until the centre of the top view of said mirror (1.21,2.3,3.3), which connects to a vertically upward projecting member (1.22, 2.5,3.5) which connects said mirror (1.21, 2.3, 3.3) to said horizontally projecting member (1.23, 2.6, 3.6), such that said solar ray concentration system comprises a 45 degree inclined flat mirror (1.20), preferably an outward curved surfaced mirror (2.2), and most preferably a convex shaped surfaced mirror (3.2), which is positioned inside the lower volume of said mast structure (1.5, 2.1, 3.1) and which faces partly horizontally towards an opening geometry through said mast structure (1.5,2.1, 3.1), and so faces straight towards said mirror (1.21,2.3,3.3), and which also faces partly downwards towards a pipe (1.25, 2.7, 3.7) which is embedded in said mast structure (1.5, 2.1, 3.1), in which the reflected concentrated light rays are driven towards flowing water, which said rays hence convert into steam to drive turbines and generate electricity.

9. A solar ray concentration system according to Claims 1 to 8 which comprises a rotational system (1.24, 2.4, 3.4) which comprises an electric motor which rotates said mast structure (1.5, 2.1, 3.1) around its own central axis (1.7), hence comprising a rotational basement structure (1.24, 2.4, 3.4) at the lower part of said mast (1.5, 2.1, 3.1), which is fixed and attached to said mast structure (1.5, 2.1, 3.1), such that said collection mirrors (1.3) can always be orientated towards the sun, no matter where the sun is positioned, such that preferably, said embedded pipe (1.25) inside said mast structure (1.5) projects downwards to a vertical pipe (1.13) which is embedded in the ground below said basement structure (1.24), such that said 45 degree inclined flat mirrors (1.6, 1.8) attach to said mast structure (1.5, 2.1, 3.1) by each of said two horizontally projecting members (1.28), which are being positioned at the two end sides of said oppositely positioned flat mirrors (1.6, 1.8), such that these (1.6, 1.8) are positioned between said lower Plano-convex/convex lenses (1.11, 1.26, 1.18, 1.27, 1.19) and said lower flat inclined reflecting mirror (1.3), such that said two 45 degree inclined flat mirrors (1.6, 1.8) have the same length as that of said Plano-convex/convex lenses (1.11, 1.26, 1.18, 1.27, 1.19) and said inclined flat collection mirrors (1.3), and are positioned exactly in the same horizontal position as said lenses (1.11, 1.26, 1.18, 1.27, 1.19).

10. A solar ray concentration system according to Claims 1 to 9 in which said mirrors (1.3, 1.6, 1.8, 1.20, 1.21), including said flat inclined collection mirrors (1.3), said two 45 degree angled oppositely facing mirrors (1.6, 1.8), said mirror (1.21) and said mirror (1.20), comprise all rectangular shapes, such that these (1.3, 1.6, 1.8, 1.20, 1.21) comprise rectangular geometries when viewed opposite to the central surfaces of these (1.3, 1.6, 1.8, 1.20, 1.21).

11. A solar ray concentration system according to Claims 1 to 10 in which said 45 degree inclined mirrors (1.6, 1.8) are positioned such that said outer 45 degree inclined reflection mirrors (1.6) are positioned closer to said mast structure (1.5, 2.1, 3.1) than said inner 45 degree inclined mirrors (1.8), such that said inner 45 degree inclined mirrors (1.8) partly project towards said mast structure (1.5, 2.1, 3.1) and partly upwards towards the Plano-convex/convex lenses (1.11, 1.26, 1.18, 1.27, 1.19), while said outer 45 degree inclined mirrors (1.6) partly project downwards towards the Plano-convex/convex lenses (1.11, 1.26, 1.18, 1.27, 1.19) and partly horizontally away from said mast structure (1.5, 2.1, 3.1) towards said inner 45 degree inclined mirror (1.8), therefore reflecting and driving said concentrated light rays behind said inclined collection mirrors (1.3), and downwards towards the inner side of said upper Plano-convex/convex lens (1.26, 1.18) of said next lower set of components down said mast structure (1.5, 2.1, 3.1), such that said inclined collection mirrors (1.3) are sustained by a pivot which is attached to the outer far end of said horizontally projecting members (1.28).

12. A solar ray concentration system according to Claims 1 to 11 which is comprised on vessels of any type, including ships, boats, barges, pontoons, or any other type of surface vessels, such that said solar ray concentration system can be mounted over ground and take water (1.32, 2.9, 3.9) from a nearby water basin (1.32, 2.9, 3.9) such as a sea, a lake, a river, a or any other basin from an onshore or offshore surface, depending on the construction convenience according to the geography of the place to install said systems.

13. A solar ray concentration system according to Claims 1 to 12 which comprises a pipe (1.35,2.12,3.12) into which water (1.32,2.9,3.9) is driven by gravity, such that said water (1.32, 2.9, 3.9) evaporates when passing under said vertically driven concentrated solar rays into a lower hollow pipe (1.13, 1.25, 2.7, 3.7), hence preferably comprising a hydrogen isolation system due to the high temperatures of said concentrated solar rays, which drives said hydrogen and oxygen for fuel or chemical use to petrol station, ports, airport and railway stations for aerospace, train, road or offshore vehicle propulsion, such that said system comprises a set of parallel positioned pipes (4.5) into which said liquid water (1.32, 2.9, 3.9) is distributed by a distribution pipe (4.4) and then steam is collected by a collection pipe (4.9) prior of driving said water into a steam turbine (4.11) and then fmally into a cooling area (4.12) comprising a secondary water basin or circuit (4.13) comprised around said pipe (4.12), in which preferably a water turbine (4.3) is comprised along said water collection pipe (4.1) to maximise electricity generation from water falling by gravity through said collection pipe (4.2), which comprises a computerised water flow control gate (1.33, 2.10,3.10) at the intake pipe (1.35, 2.12, 3.12) to control water flow into the system according to a solar ray intensity sensor's data.

14. A solar ray concentration system according to Claims 1 to 13 in which said elements stated above are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a combination of at least two of said materials.

15. A solar ray concentration system according to Claims 1 to 14 which is used to supply power and/or supply heat and/or supply hot water and/or comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, ships, boats, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports and dockyards.
